# EUROPÄISCHE PATENTANMELDUNG

(11) **EP 1 916 053 A1**
(43) Veröffentlichungstag der Anmeldung: **30.04.2008**
(21) Anmeldenummer: 07000136.7
(22) Anmeldetag: 04.01.2007
(51) Int. Cl.: B23K 26/14, B23K 7/00, B23K 10/00

(54) **Verfahren zum thermischen Trennen**

(30) Priorität: 25.10.2006 DE 102006051125
(71) Anmelder: Linde Aktiengesellschaft, 80807 München (DE)
(72) Erfinder: Danzer, Wolfgang, Dr., 84405 Dorfen (DE)

(57) **Zusammenfassung**

Die Erfindung betrifft ein Verfahren zum thermischen Trennen, wobei ein Schneidgas in eine Schneiddüse geleitet und mittels der Schneiddüse auf ein zu bearbeitendes Werkstück geführt wird. Erfindungsgemäß wird das Schneidgas periodisch wiederholend zumindest vermindert, wobei die Zeit, in welcher das Schneidgas unvermindert auf das Werkstück geführt wird, kürzer als die Hälfte einer Periode ist. Ferner betrifft die Erfindung eine entsprechende Vorrichtung mit einem Ventil. Figur 1 zeigt eine vorteilhafte Ventilschaltung V, aufgetragen gegen die Zeit t.

## Beschreibung

### Technisches Gebiet

Die vorliegende Erfindung betrifft ein Verfahren zum thermischen Trennen, wobei ein Schneidgas in eine Schneiddüse geleitet und mittels der Schneiddüse auf ein zu bearbeitendes Werkstück geführt wird. Ferner betrifft die Erfindung eine Vorrichtung zum thermischen Trennen umfassend eine Schneidgaszuleitung hinführend zu einer Schneidgasdüse und ein in der Schneidgaszuleitung angebrachtes Ventil.

### Stand der Technik

Beim thermischen Trennen werden Werkstücke geschnitten, indem an die zu schneidende Stelle Energie zugeführt wird, wodurch Material an der Bearbeitungsstelle entfernt wird und dieses Material schließlich mit Hilfe eines Gasstrahls, dem sogenannten Schneidstrahl ausgetrieben wird. Von Vorteil ist dabei, dass das Werkzeug, der Schneidstrahl, nicht stumpf wird und dass auf das zu schneidende Werkstück kaum Kraft ausgeübt wird. Zur Energiezufuhr gibt es verschiedene Möglichkeiten, so dass mehrere thermische Trennverfahren existieren.

Beim autogenen Brennschneiden wird der Werkstoff mit einer Brenngas-Sauerstoff-Flamme auf Zündtemperatur erhitzt und im Schneidsauerstoffstrom oder in einem sauerstoffhaltigem Schneidgasstrom verbrannt. Durch die Verbrennung des Werkstoffs im Schneidsauerstoff wird dem Schneidprozess zusätzlich zur Flamme Energie zugeführt. Mit der kinetischen Energie des Sauerstoffstrahls werden die durch die Verbrennung entstehende Schlacke und der geschmolzene Werkstoff ausgetrieben.

Das Plasmaschneiden ist ein Schmelzprozess, bei dem ein metallischer Werkstoff durch einen Plasmastrahl geschmolzen und aus der Schnittfuge geblasen wird. Beim Plasmaschneiden wird die erforderliche Energie zum Aufschmelzen des Materials in der Schnittfuge über einen eingeschnürten Lichtbogen zugeführt, welcher von einem Plasmagas umgeben ist. Als Plasmagas werden meist Argon, Stickstoff und Wasserstoff und Mischungen daraus eingesetzt. Dem Plasmagas wird in manchen Fällen auch Sauerstoff zugegeben, wobei der Sauerstoff zu einer Oxidation mit dem Werkstoff führen kann und dadurch zusätzliche Energie einbringt. Auch mit Druckluft als Plasmagas wird gearbeitet. Werden Sauerstoff oder sauerstoffhaltige Gasmischungen verwendet, muss eine Elektrode verwendet werden, die auch in Gegenwart von Sauerstoff eine ausreichende Lebensdauer aufweist. Vor allem deshalb, aber auch aus anderen Gründen wird teilweise auch mit zwei Gasströmen gearbeitet, von welchen der erste die Elektrode berührend umhüllt und der zweite Gasstrom den ersten ummantelt. Das Material wird beim Plasmaschneiden vom Gas aus der Schnittfuge ausgeblasen.

Beim Laserstrahlschneiden wird ein Laserstrahl als Schneidwerkszeug benutzt. Dazu wird der Laserstrahl auf die gewünschte Stelle gelenkt, wofür in der Regel mit einer Linse im Schneidkopf der Laserstrahl auf die Oberfläche des zu schneidenden Werkstücks oder in das Innere des Werkstücks fokussiert wird, wobei die hohe Energiedichte den zu schneidenden Werkstoff schnell erwärmt. Beim Laserstrahlschmelzschneiden wird das Material auf Schmelztemperatur erwärmt und beim Lasersublimierschneiden auf Verdampfungstemperatur. Beim Laserstrahlbrennschneiden wird an die zu schneidende Stelle Sauerstoff geleitet, damit, wie zum Brennschneiden notwendig, durch die Verbrennung des Sauerstoffs mit dem Werkstoff zusätzliche Energie eingebracht wird. Der Laserstrahl erwärmt dazu das Werkstück an der Bearbeitungsstelle fortwährend auf die Entzündungstemperatur, so dass die Verbrennung des Werkstoffmaterials mit dem Schneidsauerstoff stattfinden kann. Das geschmolzene Material wird beim Laserstrahlschneiden mit dem Schneidgas aus der Schnittfuge ausgetrieben, wobei beim Laserstrahlbrennschneiden der Schneidsauerstoffstrahl neben dem geschmolzenen Material auch die entstehende Schlacke austreibt. Als Schneidgas wird beim Laserstrahlbrennschneiden Sauerstoff, ansonsten wird als Schneidgas meist Stickstoff, Argon und/oder Helium verwendet. Auch Druckluft wird eingesetzt. Der Laserstrahl ist ein ideales Werkzeug, um metallische und nichtmetallische Werkstoffe geringer Dicken zu schneiden. Mit zunehmender Werkstoffdicke nimmt die Schneidgeschwindigkeit des Laserstrahls jedoch stark ab. So können beispielsweise beim Laserstrahlbrennschneiden Bleche mit einer Dicke von etwa zwei Millimetern sechsmal schneller als Bleche mit einer Dicke von etwa fünfzehn Millimetern geschnitten werden.

Beim Laserstrahlschneiden kann die Schneidgeschwindigkeit erhöht werden, indem das Schneidgas in einem turbulenten Strom zugeführt wird. So ist beispielsweise aus der Druckschrift DE 43 36 010 A1 eine Laserschneidvorrichtung bekannt, bei der mittels eines Bearbeitungskopfes ein Haupthilfsgas und ein Nebenhilfsgas derart zugeführt werden, so dass sich der Gasstrom insgesamt in einem turbulenten Strömungszustand befindet. Ferner ist aus der DE 10 2004 052 323 A1 bekannt, dass durch eine modulierte Bewegung des Schneidkopfs die Scheidgeschwindigkeit beziehungsweise die zu schneidende Blechdicke erhöht werden kann. Auch durch eine nicht näher ausgeführte Modulierung von Laserleistung und Gasdruck kann dies erreicht werden.

Für das autogene Brennschneiden ist aus der Druckschrift DE 101 48 168 A1 ein Verfahren bekannt, bei dem das Schneidgas in der Schnittfuge turbulent strömt. Hierbei wird die Turbulenz des Gasstroms durch Pulsen mit einem Ventil oder durch einen weiteren diskontinuierlichen Gasstrom erzeugt.

Beim allen thermischen Trennverfahren treten jedoch, Probleme hinsichtlich der Schnittqualität auf und die Schneidvorgänge neigen zu Instabilitäten, welche zu Qualitätsschwankungen und zu nicht reproduzierbaren Schneidergebnissen führen. Besonders ausgeprägt zeigen sich diese Schwierigkeiten bei hohen Schneidgeschwindigkeiten und bei dicken Blechen.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren und eine Vorrichtung zum thermischen Trennen der eingangs genannten Art so weiterzubilden, dass die Qualität der Schnitte, insbesondere der Schnittkanten, und die Stabilität des Schneidprozesses verbessert werden und dies insbesondere auch bei hohen Schneidgeschwindigkeiten und bei dicken Blechen.

Diese Aufgabe wird durch ein Verfahren zum thermischen Trennen mit den im Anspruch 1 angegebenen Merkmalen und durch eine Vorrichtung zum thermischen Trennen mit den in Anspruch 10 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf, dass das Schneidgas nicht, wie bisher üblich, gleichmäßig gegen das Werkstück geführt wird, sondern dass gleichsam eine Taktung vorgenommen wird und das Schneidgas nach einem sich periodische wiederholenden Muster gegen das Werkstück geführt wird. Die Taktung ist jedoch ungleichmäßig. Innerhalb einer Periode wird das Schneidgas für die kürzere Zeit unvermindert an das Werkstück gelenkt und für die längere vermindert. Für den Schneidgasdruck, der an die Bearbeitungsstelle vorliegt, bedeutet dies, dass er nicht konstant ist sondern einer zeitlichen Änderung unterliegt, wobei Folgendes gilt: Die Änderung des Schneidgasdrucks erfolgt periodisch, sie folgt also einem zeitlich wiederkehrenden Muster. Innerhalb einer Periode, also innerhalb der Zeitspanne bis sich das Muster zu wiederholen beginnt, gibt es einen maximalen Wert für den Schneidgasdruck, der sich einstellt, wenn das Schneidgas unvermindert aus der Schneiddüse strömt. Dieser maximale Wert für den Schneidgasdruck liegt jedoch in der Periode kürzer als die Hälfte an.

Mit dem erfindungsgemäßen Verfahren wird eine sehr hohe Qualität für Schnitte und Schnittkanten erreicht. Auch erhöht sich im Vergleich zu den herkömmlichen thermischen Trennverfahren die Prozessstabilität erheblich, so dass Qualitätsschwankungen unterbunden werden und die Reproduzierbarkeit steigt. Diese Vorteile zeigen sich auch und in besonderer Ausprägung bei hohen Schneidgeschwindigkeiten. Die Erhöhung der Prozessstabilität und auch die Verbesserung hinsichtlich der Schnittkanten sind auf die erfindungsgemäße Taktung des Schneidgases zurückzuführen. Die angegebene Taktung des Schneidgases bewirkt, dass das Austreiben des flüssigen Materials aus der Schnittfuge zügiger und gleichmäßiger erfolgt als bei gleich bleibendem Schneidgas. Aufgrund der mit der Erfindung einhergehenden Verbesserung des Vorgangs des Austreibens ist mit dem erfindungsgemäßen Verfahren auch eine deutliche Erhöhung der Schneidgeschwindigkeit ohne Qualitätseinbußen möglich. Von entscheidender Bedeutung ist dabei, dass die Taktung gemäß der Erfindung erfolgt.

In einer bevorzugten Ausgestaltung wird das Schneidgas vor oder in der Schneiddüse aus- und eingeschalten. Das Schneidgas ist also für weniger als die Hälfte der Periode eingeschalten und die übrige Zeit der Periode ausgeschalten. Die Vorteile der Erfindung zeigen sich doch bereits sehr deutlich, wenn das Schneidgas nicht ausgeschalten, sondern die Schneidgasmenge nur vermindert wird. Eine Verminderung der Schneidgasmenge um die Hälfte, ja sogar um eine Drittel ist dazu ausreichend. Wenn das Schneidgas abgeschalten oder vermindert wird, sinkt als Folge des Abschaltens oder Vermindems der Schneidgasdruck an der Bearbeitungsstelle. Ein Absinken des Schneidgasdrucks bis auf den Wert Null ist jedoch für das Einstellen der Vorteile der Erfindung nicht notwendig. So sinkt der Schneidgasdruck im Rahmen der Erfindung vorteilhafterweise auf Werte, die bei etwa 10 bis 50 % des maximalen Drucks liegen.

Es hat sich im Rahmen der Erfindung herausgestellt, dass die beschriebene Taktung bei allen thermischen Trennverfahren von Vorteil ist. Die Taktung unterstützt bei allen Varianten den Vorgang des Austreibens in vorteilhafter Weise. Bei den thermischen Trennverfahren, bei welchen Werkstückmaterial im Schneidsauerstoff oder im sauerstoffhaltigem Schneidgas verbrannt wird, wird nicht nur, wie bei den übrigen Trennverfahren das Austreiben des flüssigen Materials in vorteilhafter Weise unterstützt, sondern auch das Austreiben der entstehenden Schlacke. Das Austreiben des flüssigen Materials wird in überraschender Weise bei allen thermischen Trennverfahren dadurch verbessert, dass die erfindungsgemäße Taktung verwendet wird.

Die Vorteile zeigen sich in besonders hervorgehobener Weise, wenn die Zeit, in welcher das Schneidgas unvermindert gegen das Werkstück geführt wird kürzer als ein Drittel, vorzugsweise kürzer als ein Viertel, besonders bevorzugt kürzer als ein Fünftel der Periode ist. Die Vorteile zeigen sich bis hin zu Zeiten für ein unvermindertes Führen, die bei einem zehntel der Periode liegen. Selbst bei einer Zeit von einem zwanzigstel sind die erfindungsgemäßen Vorteile noch zu bemerken.

Die Vorteile der Erfindung zeigen sich in besonderer Weise, wenn die Periode für die zeitlich wiederkehrende Änderung zwischen 0,5 und 100 Hz, vorzugsweise zwischen 1 und 50 Hz, besonders bevorzugt zwischen 3 und 20 Hz liegt. Es hat sich gezeigt, dass sich die erfindungsgemäßen Vorteile insbesondere einstellen, wenn das Muster in diesem Takt wiederholt wird.

In einer besonders vorteilhaften Ausgestaltung der Erfindung wird das Schneidgas mittels mindestens eines Ventils getaktet. Eine andere Möglichkeit ist es, das Schneidgas durch einen weiteren Gasstrom zu takten, welcher dem ersten Schneidgastrom zeitweise zugeschaltet wird und welcher die Taktung des Schneidgases übernimmt.

Wird das Schneidgas mit einem Ventil aus- und eingeschalten, wird das Ventil entsprechen geöffnet oder geschlossen. Wird die Schneidgasmenge nur vermindert, ist es möglich das Ventil nicht ganz zu schließen, oder, was einfacher in der Ausführung ist, um das Ventil wird ein Bypass gelegt, durch welchen eine geringe Gasmenge strömt, wenn das Ventil geschlossen ist.

Besonders bevorzugt wird dazu ein magnetisches oder piezoelektrisches Ventil eingesetzt. Magnetische und piezoeletrische Ventile sind sehr gut zu steuern und eignen sich deshalb in besonders hervorgehobener Weise für das erfindungsgemäße Schneiden.

Als Schneidgas kann beispielsweise Sauerstoff und/oder Wasserstoff und/oder Stickstoff und/oder Argon und/oder Helium und/oder mindestens ein Gemisch mindestens zweier der vorgenannten Gase eingesetzt werden. Auch Druckluft kann verwendet werden. Die Vorteile der Erfindung zeigen sich auch bei einer Verwendung von anderen Gasen, so dass bei der Schneidgasauswahl die Anforderungen von zu bearbeitendem Werkstoff und Schneidmethode im Vordergrund stehen.

Insbesondere zeigen sich die erfindungsgemäßen Vorteile beim Schneiden von dicken Blechen. Bei Schneiden von dicken Blechen, also von Blechen mit einer Dicke von 3 mm und mehr, und beim Schneiden von sehr dicken Blechen mit Dicken von mehr als 5 mm ist der Vorgang des Austreibens von besonderer Bedeutung, da mit zunehmender Dicke auch die Menge an auszutreibendem Material ansteigt. Folglich zeigen sich die Vorteile der Erfindung bei dicken Blechen in besonderer Weise.

In der erfindungsgemäße Vorrichtung ist das Ventil mit einer Steuerungseinheit verbunden, welche das Ventil periodisch wiederholend öffnet und zumindest teilweise schließt, wobei die Steuerungseinheit das Ventil höchstens für die Hälfte der Periode öffnet. Vorzugsweise schließt das Ventil ganz. Mit dieser Vorrichtung ist es möglich die vorgenannten Vorteile zu erreichen.

Sowohl das Verfahren zum thermischen Trennen gemäß der vorstehend dargelegten Art als auch die Vorrichtung zum thermischen Trennen gemäß der vorstehend dargelegten Art bieten den Vorteil, dass der Schneidprozess besonders stabil ist und auch bei hohen Schneidgeschwindigkeiten Schnitte guter Qualität, insbesondere saubere Schnittkanten, erreicht werden.

### Bester Weg zur Ausführung der vorliegenden Erfindung

Zum schnellen und gratfreien Brennschneiden mit Flamme oder Laserstrahl wird vorzugsweise Sauerstoff mit einer hohen Reinheit eingesetzt. Bei den Brennschneidverfahren stellt sich neben den Vorteilen hinsichtlich des Austreibens von Schlacke und geschmolzenem Material ein weiterer Vorteil ein. So kann die Schnittfuge während des Schneidvorgangs abkühlen, denn aufgrund des ausbleibenden Schneidgases wird die Verbrennung des Sauerstoffs zurückgenommen. Dies verbessert Qualität und Optik der Schnittfuge, da die unerwünschte Oxidationsschicht an den Schnittkanten vermindert wird. Auch die Gefahr eines Wärmeverzugs wird verringert und die Schlackenmenge geht zurück. Trotz der Rücknahme der Sauerstoffmenge ist diese jedoch ausreichend groß, um über die Verbrennung genügend Energie einzubringen, so dass ein sehr schnelles Schneiden möglich ist.

Beim Laserschmelzschneiden ist der Austreibvorgang des geschmolzenen Materials von großer Bedeutung, so dass sich die erfindungsgemäßen Vorteile zeigen. Beim Lasersublimierschneiden wird das an der zu schneidenden Stelle Material in erster Linie verdampft, jedoch entsteht auch flüssiges Material. Für einen stabilen Schneidprozess ist es wichtig dass das flüssige Material ausgetrieben wird, so dass sich auch hier die Vorteile der Erfindung zeigen.

Beim Plasmaschneiden muss das geschmolzene Material und beim Plasmaschneiden mit Oxidation neben dem geschmolzenen Material auch Schlacke ausgetrieben werden. Auch hier zeigen sich die mit der Erfindung einhergehenden Vorteile. Werden zum Plasmaschneiden ein innerer Plasmagasstrahl und eine äußerer Sekundärstrahl eingesetzt kann auch nur einer der beiden Gasstrahlen getaktet werden.

Bei allen thermischen Trennverfahren wird durch die erfindungsgemäße Taktung der Vorgang des Austreibens positiv unterstützt. Dies ist wohl auf den Impuls zurückzuführen, der auf das flüssige Material durch den Anstieg des Schneidgasdrucks ausgeübt wird. Des Weiteren kann es von Vorteil sein, dass es möglich wird, einen sehr hohen Wert für den maximalen Schneidgasdruck zu wählen, da dies ebenfalls den Vorgang des Austreibens des Materials verbessert. Durch die Verbesserung des Austreibvorgangs verläuft der Schneidprozess insgesamt stabiler, so dass das Schneiden sehr gut handhabbar wird und die Schneidergebnisse sehr gut reproduzierbar sind. Auch ist eine Erhöhung der Schneidgeschwindigkeit möglich, ohne dass dabei der Schneidprozess an Stabilität verliert. Dies gilt auch und insbesondere beim Schneiden von dicken Blechen, bei welchen ja die Mengen an auszutreibendem Material besonders groß sind.

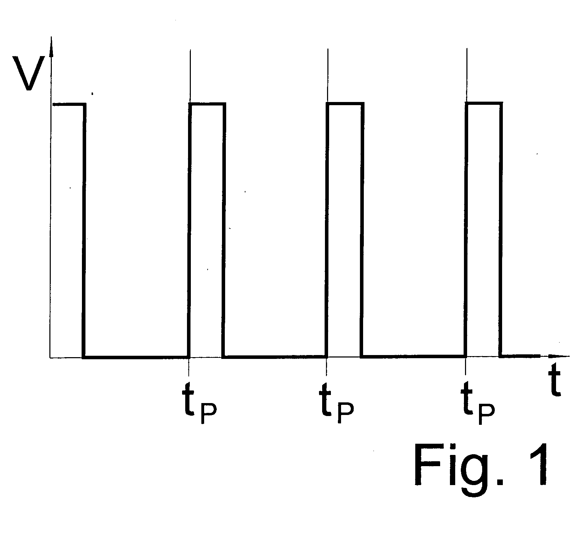

Die mit der Erfindung angebende Taktung soll nun noch anhand von Figur 1 näher erläutertet werden. Dafür ist in Figur 1 die Schaltung des Ventils gegen die Zeit dargestellt. Mit der beispielhaften Ventilschaltung wird eine Taktung erreicht, die der vorteilhaften Ausgestaltung folgt, bei welcher das Schneidgas für weniger als die Hälfte der Periode eingeschalten wird. In Figur 1 ist dazu nach oben der Schaltung des Ventils V und nach rechts die Zeit t aufgetragen. Die Zeit t zeigt die periodische Struktur, wobei eine Periode die Zeit tₚ aufweist, d.h. nach der Zeit tₚ wiederholt sich der Ablauf. Für die Ventilschaltung V zeigt sich für die kürzere Zeitspanne innerhalb der Periode tₚ ein oberer Wert, welcher bedeutet, dass das Ventil geöffnet ist. Für die längere Zeitspanne ist der Wert der Ventilschaltung bei Null, d.h. das Ventil ist geschlossen. Für den Schneidgasdruck an der Bearbeitungsstelle bedeutet dies: Zu Beginn der Periode wird das Ventil geöffnet und die maximale Schneidgasmenge wird an die Bearbeitungsstelle geleitet. Infolgedessen steigt der Schneidgasdruck sehr schnell auf seinen maximalen Wert an. Während nun das Ventil offen ist, liegt dieser maximale Schneidgasdruck vor. Nach Schließen des Ventils fällt der Schneidgasdruck ab bis auf einen minimalen Wert. Dieser minimale Wert liegt jedoch vorteilhafterweise über dem Wert Null, so dass an der Bearbeitungsstelle kontinuierlich Schneidgas vorliegt und ein vollständiges Abbrechen des Schneidprozesses vermieden wird. Von diesem minimalen Wert aus steigt der Schneidgasdruck wieder auf seinen maximalen Wert an, sobald das Ventil wieder geöffnet wird und ein neuer Zyklus beginnt.

Die Vorteile der Erfindung zeigen sich bei alle Verfahren des thermischen Trennens, also beim autogenen Brennschneiden, beim Plasmaschneiden und beim Laserschneiden.

## Patentansprüche

1. Verfahren zum thermischen Trennen, wobei ein Schneidgas in eine Schneiddüse geleitet und mittels der Schneiddüse auf ein zu bearbeitendes Werkstück geführt wird,
**dadurch gekennzeichnet,**
**dass** das Schneidgas periodisch wiederholend zumindest vermindert wird, wobei die Zeit, in welcher das Schneidgas unvermindert auf das Werkstück geführt wird, kürzer als die Hälfte einer Periode ist.

2. Verfahren gemäß Anspruch 1, **dadurch gekennzeichnet, dass** das Schneidgas vor oder in der Schneidüse periodisch wiederholend ausgeschalten wird, wobei die Zeit, in welcher das Schneidgas gegen das Werkstück geführt wird, kürzer als die Hälfte der Periode ist.

3. Verfahren gemäß Anspruch 1 oder 2, **dadurch gekennzeichnet**, das thermische Trennen mittels der Methode
- des autogenen Brennschneiden und/oder
- des Laserschneidens und/oder
- des Plasmaschneidens
ausgeführt wird.

4. Verfahren gemäß mindestens einem der Ansprüche 1 bis 3, **dadurch gekennzeichnet, dass** die Zeit, in welcher das Schneidgas unvermindert gegen das Werkstück strömt kürzer als ein Drittel, vorzugsweise kürzer als ein Viertel, besonders bevorzugt kürzer als ein Fünftel der Periode ist.

5. Verfahren gemäß mindestens einem der Ansprüche 1 bis 4, **dadurch gekennzeichnet, dass** die Periode für die zeitliche Wiederholung zwischen 0,5 und 100 Hz, vorzugsweise zwischen 1 und 50 Hz, besonders bevorzugt zwischen 3 und 20 Hz liegt.

6. Verfahren gemäß mindestens einem der Ansprüche 1 bis 5, **dadurch gekennzeichnet, dass** das Schneidgas mechanisch, insbesondere mittels mindestens eines Ventils, vermindert oder ausgeschalten wird.

7. Verfahren gemäß Anspruch 6, **dadurch gekennzeichnet, dass** ein magnetisches oder piezoelektrisches Ventil eingesetzt wird.

8. Verfahren gemäß mindestens einem der Ansprüche 1 bis 7, **dadurch gekennzeichnet, dass** als Schneidgas Sauerstoff, Stickstoff, Argon, Wasserstoff oder ein Gemisch aus diesen Gasen verwendet wird.

9. Verfahren gemäß mindestens einem der Ansprüche 1 bis 8, **dadurch gekennzeichnet, dass** dicke Bleche geschnitten werden.

10. Vorrichtung zum thermischen Trennen umfassend eine Schneidgaszuleitung hinführend zu einer Schneidgasdüse und ein in der Schneidgaszuleitung angebrachtes Ventil
**dadurch gekennzeichnet,**
**dass** das Ventil mit einer Steuerungseinheit verbunden ist, welche das Ventil periodisch wiederholend öffnet und zumindest teilweise schließt, wobei die Steuerungseinheit das Ventil höchstens für die Hälfte der Periode öffnet.

11. Vorrichtung gemäß Anspruch 10, **dadurch gekennzeichnet, dass** die Steuerungseinheit das Ventil für höchsten ein Drittel, vorzugsweise für höchstens ein Viertel, besonders bevorzugt für höchstens ein Fünftel der Periode öffnet.

12. Vorrichtung gemäß Anspruch 10 oder 11, **dadurch gekennzeichnet, dass** die periodische Wiederholung eine Frequenz von 1 und 100 Hz, vorzugsweise zwischen 3 und 50 Hz, besonders bevorzugt zwischen 5 und 20 Hz aufweist.

13. Vorrichtung gemäß mindestens einem der Ansprüche 10 bis 12, **dadurch gekennzeichnet, dass** das Ventil ein magnetisches oder piezoelektrisches Ventil ist.
